# EUROPÄISCHE PATENTANMELDUNG

(11) **EP 2 308 358 A1**
(43) Veröffentlichungstag der Anmeldung: **13.04.2011**
(21) Anmeldenummer: 10013526.8
(22) Anmeldetag: 12.10.2010
(51) Int. Cl.: A47J 31/06, B01D 29/01, B23K 26/38

(54) **Filter zur Zubereitung flüssiger Lebensmittel aus einem Getränkesubstrat und Verfahren zur Herstellung eines Filters**

(30) Priorität: 12.10.2009 DE 102009049158
(71) Anmelder: NIRO-PLAN AG, 4663 Aarburg (CH)
(72) Erfinder:
(74) Vertreter: Lemcke, Brommer & Partner

(57) **Zusammenfassung**

Die Erfindung betrifft einen Filter (4, 4') zur Zubereitung flüssiger Lebensmittel aus einem Getränkesubstrat, insbesondere zur Zubereitung von Kaffee, umfassend mindestens einen Filterbereich (4b, 4b'), welcher eine Vielzahl den Filterbereich durchdringende Filteröffnungen (4a, 4a') aufweist. Die Erfindung ist **dadurch gekennzeichnet, dass** die Querschnittsfläche jeder der Vielzahl der Filteröffnungen im Filterbereich zumindest an einer Oberseite des Filters genau zwei oder genau drei spitzwinklige Eckbereiche aufweist und dass jede der Vielzahl der Filteröffnungen an der Oberseite des Filters eine geringere Querschnittsfläche aufweist als an einer der Oberseite gegenüberliegenden Unterseite des Filters.

## Beschreibung

Die Erfindung betrifft einen Filter zur Zubereitung flüssiger Lebensmittel aus einem Getränkesubstrat sowie ein Verfahren zur Herstellung solch eines Filters.

Bei der Herstellung flüssiger Lebensmittel aus einem Getränkesubstrat wird typischerweise eine Flüssigkeit durch das Getränkesubstrat geleitet, zur Aufnahme von Aromastoffen aus dem Getränkesubstrat. Hierbei finden Filter Anwendung, welche im Flussweg der Flüssigkeit stromabwärts des Getränkesubstrates angeordnet sind und für die mit Aromastoffen angereicherte Flüssigkeit, nicht jedoch für das Getränkesubstrat durchlässig sind.

So ist es aus der Kaffeezubereitung bekannt, dass heißes Wasser durch eine Brühkammer geleitet wird. In der Brühkammer befindet sich Kaffeepulver als Getränkesubstrat und an einem Auslass der Brühkammer ist ein Filter angeordnet. Das heiße Wasser durchläuft somit nach dem Aufbrühvorgang den Filter, welcher eine Mitnahme von Kaffeepulver verhindert.

Typische Filter weisen einen Filterbereich auf, welcher eine Vielzahl den Filter im Filterbereich durchdringende Filteröffnungen aufweist. Die Größe und/oder Form der Filteröffnungen ist derart gewählt, dass die Körner des verwendeten Getränkesubstrates den Filter nicht durchdringen können.

Aus der EP 0 687 435 A1 ist ein topfförmiger Dauerfiltereinsatz für Espressomaschinen bekannt, in dessen Boden mehrere Entlastungsschlitze vorgesehen sind, deren Schlitzbreite kleiner ist als der mittlere Durchmesser des verwendeten Kaffeepulvers und deren Länge ein vielfaches des mittleren Durchmessers des Mahlgutes beträgt.

Hierdurch soll unabhängig von Kaffeesorte und Mahlgrad des verwendeten Kaffeepulvers ein gleichmäßig gutes Espresso-Ergebnis geliefert werden.

Ausgehend von diesem Stand der Technik liegt der vorliegenden Erfindung die Aufgabe zugrunde, einen Filter zur Zubereitung flüssiger Lebensmittel aus einem Getränkesubstrat zu schaffen, der verbesserte Eigenschaften bei der Zubereitung des Lebensmittels und bei der Reinigung des Filters aufweist.

Gelöst ist diese Aufgabe durch einen Filter zur Zubereitung flüssiger Lebensmittel aus einem Getränkesubstrat gemäß Anspruch 1 sowie durch ein Verfahren zur Herstellung eines solchen Filters gemäß Anspruch 11. Vorteilhafte Ausgestaltungen des erfindungsgemäßen Filters finden sich in den Ansprüchen 2 bis 10. Vorteilhafte Ausgestaltungen des Verfahrens finden sich in den Ansprüchen 12 bis 13.

Der erfindungsgemäße Filter zur Zubereitung flüssiger Lebensmittel aus einem Getränkesubstrat, insbesondere zur Zubereitung von Kaffee, umfasst mindestens einen Filterbereich. Dieser Filterbereich weist eine Vielzahl den Filterbereich und damit den Filter durchdringende Filteröffnungen auf. Die Filteröffnungen stellen somit im Filterbereich des Filters eine flüssigkeitsleitende Verbindung zwischen einer Oberseite des Filters und einer Unterseite des Filters dar, so dass Flüssigkeit den Filter in dem Filterbereich durch die Filteröffnungen durchdringen kann.

Wesentlich ist, dass die Querschnittsfläche jeder der Vielzahl der Filteröffnungen im Filterbereich zumindest an der Oberseite des Filters genau zwei oder genau drei spitzwinklige Eckbereiche aufweist und dass jede der Vielzahl der Filteröffnungen im Filterbereich an der Oberseite des Filters eine geringere Querschnittsfläche aufweist als an der der Oberseite gegenüberliegenden Unterseite des Filters.

Durch die erfindungsgemäße Ausgestaltung der Filteröffnungen ergeben sich mehrere Vorteile:
Zum einen wird eine Verstopfung der Filteröffnungen durch ein oder mehrere Körner des Getränkesubstrats vermieden. Dies ist darin begründet, dass an der Oberseite des Filters, welche bei Gebrauch dem Getränkesubstrat zugewandt ist, die Filteröffnungen eine geringere Querschnittsfläche aufweisen als an der Unterseite. Hierdurch wird ein Festsetzen oder Einklemmen von Körnern des Getränkesubstrates in den Filteröffnungen vermieden, da selbst geringfügig in die an der Oberseite gelegene Öffnung einer Filteröffnung eindringende Körner lediglich an der Oberseite mit dem Filter in Kontakt stehen. Aufgrund der größeren Querschnittsfläche an der Unterseite des Filters ergibt sich somit auch für solche geringfügig in die Filteröffnung eindringenden Körner nur eine geringe Kontaktfläche zu den Wänden oder Rändern der Filteröffnungen, so dass in einem Spülvorgang oder bei manuellem Ausleeren des Filters die Körner mit geringer Kraft wieder aus den Filteröffnungen lösbar sind.

Weiterhin ist auch für den Fall, dass ein oder mehrere Körner des Getränkesubstrates geringfügig in die Filteröffnung eindringen ein Flüssigkeitsdurchfluss durch diese Filteröffnung möglich. Dies ist darin begründet, dass Körner des Getränkesubstrates typischerweise runde oder elliptische Querschnittsflächen aufweisen. Aufgrund der zwei oder drei spitzwinkligen Eckbereiche der Filteröffnungen ist daher nahezu ausgeschlossen, dass eine Filteröffnung vollständig durch ein oder mehrere Körner des Getränkesubstrates verstopft wird, d. h. dass das oder die Körner die gesamte Querschnittsfläche der Filteröffnung an der Oberseite des Filters ausfüllen. Denn mit an Sicherheit grenzender Wahrscheinlichkeit wird kein Korn oder keine Kombination von Körnern derart an der Filteröffnung anliegen, so dass auch sämtliche spitzwinklige Eckbereiche ausgefüllt sind. Darüber hinaus ist durch die auf der Unterseite größere Querschnittsfläche der Filteröffnung gewährleistet, dass die Flüssigkeit nach Durchdringen der Filteröffnung an der Oberseite des Filterbereiches mit im Vergleich zu Filtern mit konstanten Querschnittsflächen bei den Filteröffnungen geringerem Durchflusswiderstand durch den Filter hindurchfließt.

Ein weiterer Vorteil ergibt sich dadurch, dass bei der Zubereitung von flüssigen Lebensmitteln spitzwinklige Eckbereiche die Qualität des erzeugten Getränks verbessern. Insbesondere wird bei der Erzeugung von Kaffee aus Kaffeepulver durch die spitzwinkligen Eckbereiche eine höherwertigere Crema erzielt.

Vorzugsweise nimmt die Querschnittsfläche jede der Vielzahl der Filteröffnungen ausgehend von der Oberseite des Filters zu der Unterseite des Filters hin zu. Insbesondere ist eine konstante oder stufenartige Zunahme vorteilhaft. Hierdurch wird in besonderem Maße eine Verstopfung der Filteröffnungen vermieden und ein leichtes Ablösen eventuell geringfügig in die Filteröffnung eindringender Körner des Getränkesubstrates ermöglicht.

In einer weiteren vorzugsweisen Ausführungsform ist die Querschnittsfläche jeder der Vielzahl der Filteröffnungen im Filterbereich zumindest an der Oberseite des Filters ein Dreieck, vorzugsweise ein gleichseitiges Dreieck.

Insbesondere ist es vorteilhaft, dass jede der Vielzahl der Filteröffnungen die Form eines Tetraederstumpfes aufweist. Der Tetraederstumpf ergibt sich aus einem Tetraeder, dessen sämtliche Seitenflächen aus gleichseitigen Dreiecken bestehen, wobei an der Spitze des Tetraeders ein gleichartiger, kleinerer Tetraeder entfernt ist. Hierdurch ist in besonderer Weise die Erzeugung einer großvolumigen und hochwertigen Crema gegeben. Weiterhin wird besonders effizient das Verstopfen der Filteröffnungen verhindert. Darüber hinaus stellt ein Tetraederstumpf eine kostengünstig herstellbare Geometrie für Filteröffnungen dar.

In einer weiteren vorzugsweisen Ausführungsform weist die Querschnittfläche jeder der Vielzahl der Filteröffnungen im Filterbereich zumindest an der Oberseite des Filters genau zwei spitzwinklige Eckbereiche auf. Die Eckbereiche sind durch zwei jeweils zur Innenseite der Querschnittsfläche gekrümmte Linien miteinander verbunden. Auch diese vorteilhafte Ausführungsform führt zu einer Vermeidung von verstopften Filteröffnungen und zur Erzeugung einer hochwertigen Crema. Darüber hinaus ist die Fertigung noch kostengünstiger realisierbar, da lediglich zwei spitzwinklige Eckbereiche pro Filteröffnung gefertigt werden müssen.

Vorzugsweise wird der erfindungsgemäße Filter zur Erzeugung von Kaffee und als Getränkesubstrat Kaffeepulver verwendet. Ebenso liegt jedoch auch die Erzeugung anderer Getränke aus anderen Getränkesubstraten, vorzugsweise pulverförmigen Substraten, im Rahmen der Erfindung.

Der Filter ist vorteilhafterweise aus Metall,- vorzugsweise rostfreiem Stahl oder aus Aluminium gefertigt.

Vorzugsweise weist der Filter zumindest im Filterbereich zwischen Ober- und Unterseite eine Dicke von mindestens 0,3 mm, vorzugsweise mindestens 0,5 mm, im Weiteren bevorzugt eine Dicke im Bereich zwischen 0,5 mm und 1,0 mm auf. Dies ist darin begründet, dass der Brühvorgang typischerweise die Beaufschlagung der Flüssigkeit, wie beispielsweise des heißen Wassers, mit Druck beinhaltet. Durch die genannten Dicken wird eine ausreichende Stabilität des Filters gewährleist, insbesondere bei Ausführung des erfindungsgemäßen Filters aus Metall.

Typischerweise wird der erfindungsgemäße Filter am Auslass einer Kammer zur Aufnahme des Getränkesubstrates angeordnet und die zur Herstellung des flüssigen Lebensmittels verwendete Flüssigkeit wird durch diese Kammer und somit durch das Getränkesubstrat geleitet und verlässt die Kammer bei Durchfluss durch den Filter.

Vorzugsweise sind die Querschnittsflächen und die Form der Querschnittsfläche der Filteröffnungen zumindest an der dem Getränkesubstrat zugewandten Seite derart ausgebildet, dass typische Körner des Getränkesubstrates nicht durch die Filteröffnungen hindurchtreten können. Insbesondere ist der minimale Abstand zumindest zweier gegenüberliegender Randpunkte der Querschnittsfläche der Filteröffnungen an der Oberseite des Filters vorteilhafterweise kleiner als der kleinste oder der typische Durchmesser eines Korns des Getränkesubstrates.

Bei der Erzeugung von Kaffee ist typischerweise in der Kammer ein Druck von mindestens 2 bar erforderlich, um eine Crema auszubilden. Der Druckaufbau in der Kammer ist abhängig von der freien Durchlauffläche des Filters, d. h. insbesondere Querschnitt der Filteröffnungen und Anzahl der Filteröffnungen sowie Beschaffenheit des Getränkesubstrates, insbesondere Mahlgrad. Vorzugsweise sind die Größen der Querschnittsflächen und die Form der Querschnittsfläche der Filteröffnungen zumindest an der dem Getränkesubstrat zugewandten Seite derart ausgebildet, dass sich für typische Kaffeepulver mit typischen Mahlgraden ein Druckaufbau von mindestens 2 bar ergibt.

Für typische Anwendungen bei Kaffeemaschinen, insbesondere bei Kaffeevollautomaten ist es zur Erzielung der vorgenannten Eigenschaften vorteilhaft, dass die Querschnittsfläche jeder der Vielzahl der Filteröffnungen im Filterbereich an der Oberseite des Filters im Bereich von 0,01 mm² bis 2 mm², vorzugsweise im Bereich von 0,02 mm² bis 0,08 mm² liegt.

Um Verstopfungen der Filteröffnungen effizient zu vermeiden, liegt das Verhältnis der Querschnittsfläche an der Oberseite zu der Querschnittsfläche an der Unterseite jeder der Vielzahl der Filteröffnungen vorzugsweise im Bereich 1:1,2 bis 1:3, im Weiteren vorteilhafterweise im Bereich 1:1,5 bis 1:2.

Die Filteröffnungen weisen vorzugsweise einen Abstand im Bereich von 0,02 mm bis 1,5 mm, im Weiteren bevorzugt im Bereich von 0,05 mm bis 0,3 mm auf.

Typischerweise wird wie zuvor beschrieben bei Verwendung des erfindungsgemäßen Filters das flüssige Lebensmittel in einer Brüheinheit erzeugt. Die Brüheinheit weist eine Brühkammer zur Aufnahme eines Lebensmittelprodukts mit löslichen Aromastoffen auf. Solche Lebensmittelprodukte sind die zuvor genannten Getränkesubstrate, insbesondere Kaffeepulver. Die Vorrichtung umfasst weiterhin eine Flüssigkeitszuführeinheit, welche fluidleitend mit der Brühkammer verbunden ist, so dass Flüssigkeit mittels der Flüssigkeitszuführeinheit in die Brühkammer zuführbar ist. Wesentlich ist, dass die Vorrichtung einen im Flussweg an einem Flüssigkeitsausgang der Brühkammer angeordneten Filter aufweist, der als erfindungsgemäße Filter ausgebildet ist.

Zur Vermeidung von Verstopfungen und Erzielung einer hochwertigen Crema weisen die spitzwinkligen Eckbereiche der Filteröffnungen des erfindungsgemäßen Filters vorzugsweise einen Innenwinkel kleiner 80°, insbesondere einen Innenwinkel kleiner 70°, im Weiteren bevorzugt einen Innenwinkel von etwa 60° auf.

Vorzugsweise sind Ober- und Unterseite des Filters parallel zueinander.

Vorteilhafterweise weist der Filter die Form einer Scheibe auf, ebenso liegen jedoch auch andere Filterformen im Rahmen der Erfindung. Der Filterbereich ist vorteilhafterweise mittig auf der Oberseite des Filters angeordnet. Ebenso liegt es im Rahmen der Erfindung, dass der Filterbereich den gesamten Filter umfasst.

Vorzugsweise weisen die Querschnittsflächen jeder der Filteröffnungen an der Oberseite des Filters die gleiche Form auf wie an der Unterseite des Filters. Insbesondere sind die Filteröffnungen vorzugsweise derart ausgebildet, dass die Form der Querschnittsfläche - nicht jedoch die Größe der Querschnittsfläche - parallel zur Oberseite ausgehende von der Oberseite bis zu der Unterseite des Filters konstant bleibt.

Die Herstellung vorbekannter Filter erfolgt typischerweise derart, dass durch einen Filterrohling Dornen zur Erzeugung der Filteröffnungen hindurch gestoßen werden und anschließend die Durchstoßgrade abgeschliffen werden. Ebenso ist es bekannt, mittels Ätzverfahren die Filteröffnungen in einem Filterrohling zu erzeugen.

Nachteilig an diesem Verfahren ist, dass hohe Abweichung hinsichtlich der Größe und Form der Filteröffnungen untereinander auftreten und darüber hinaus das Ätzverfahren technisch aufwendig und damit kostenintensiv ist.

Diese Nachteile werden vermieden, indem der erfindungsgemäße Filter aus einem Filterrohling erstellt wird, indem mittels eines Laserstrahls aus dem Rohling durch lokales Herausschneiden und/oder Aufschmelzen und/oder Verdampfen des Rohlingsmaterials eine Vielzahlfahl von Filteröffnungen in einem Filterbereich des Rohlings erzeugt werden.

Durch die Verwendung eines Laserstrahls zur Erzeugung der Filteröffnungen ist in kostengünstiger Weise eine Erzeugung der vorgenannten Formen der Filteröffnungen des erfindungsgemäßen Filters möglich. Darüber hinaus werden mit hoher Präzision gleichartige Filteröffnungen erzeugt, verglichen mit der Herstellung der Filteröffnungen mittels Durchstoßen oder Ätzen. Insbesondere die Ausbildung der zwei oder drei spitzwinkligen Eckbereiche ist mit den vorgenannten Verfahren nahezu unmöglich, da hier zu große Fertigungstoleranzen vorliegen.

Die Erfindung umfasst daher weiterhin die Verwendung eines Lasers zur Herstellung eines erfindungsgemäßen Filters.

Bei dem erfindungsgemäßen Verfahren werden die Filteröffnungen wie zuvor beschrieben mittels eines Laserstrahls erzeugt, wobei die Querschnittsfläche jeder der Vielzahl der Filteröffnungen im Filterbereich zumindest an einer Oberseite des Filters mit genau zwei oder genau drei spitzwinkligen Eckbereichen erzeugt wird und jede der Vielzahl der Filteröffnungen im Filterbereich an der Oberseite des Filters mit einer geringeren Querschnittsfläche als an einer der Oberseite gegenüberliegenden Unterseite des Filters erzeugt wird.

Vorzugsweise werden die Filteröffnungen derart erzeugt, dass im Filterbereich bei jeder Filteröffnung mittels des Laserstrahls eine annähernd runde oder annähernd ovale sich von der Ober- zu der Unterseite des Filters vergrößernde Öffnung erzeugt wird und in einem nachfolgenden Verfahrensschritt - gegebenenfalls unter Zwischenschaltung weiterer Verfahrensschritte - mittels des Laserstrahls die gewünschte Form der Filteröffnung mit genau zwei oder genau drei spitzwinkligen Eckbereichen durch Herausschneiden und/oder Aufschmelzen und/oder Verdampfen des Rohlingmaterials erzeugt wird.

Insbesondere ist es somit vorteilhaft, zunächst eine konische oder ähnliche sich von der Oberseite zur Unterseite vergrößernde Filteröffnung mit ovalem oder elliptischem Querschnitt mittels Perkussieren zu erzeugen und anschließend analog zu einem Drepanieren wie zuvor beschrieben die tatsächlich gewünschte Form der Filteröffnung durch Herausschneiden und/oder Aufschmelzen und/oder Verdampfen des Rohlingmaterials zu erzeugen.

Vorzugsweise wird während der Erzeugung der runden, elliptischen oder ovalen, sich im Filterbereich von der Ober- zu der Unterseite des Filters vergrößernden Öffnung der Durchmesser der Laserstrahls mittels einer Durchmessersteuereinheit in mindestens einer Richtung parallel zu der Oberseite vergrößert. Insbesondere ist es vorteilhaft, simultan den Durchmesser des Laserstrahls in zwei zueinander senkrecht stehenden und parallel zur der Oberseite stehenden Richtungen zu vergrößern.

Weitere Merkmale und vorteilhafte Ausgestaltungen der Erfindung werden im Folgenden anhand der Figuren und Ausführungsbeispiele erläutert und beschrieben. Dabei zeigt:
- Figur 1: einen Teilbereich einer erfindungsgemäßen Vorrichtung zur Erzeugung eines Kaffeegetränks in schematischer Darstellung;
- Figur 2: einen erfindungsgemäßen Filter mit Filteröffnungen in Form eines Tetraederstumpfes;
- Figur 3: einen Teilquerschnitt gemäß Linie B und senkrecht zur Zeichen- ebene in Figur 2 und
- Figur 4: ein weiteres Ausführungsbeispiel eines erfindungsgemäßen Filters, bei dem die Filteröffnungen an der Oberseite und an der Unterseite des Filterbereiches genau zwei spitzwinklige Eckbereiche aufwei- sen.

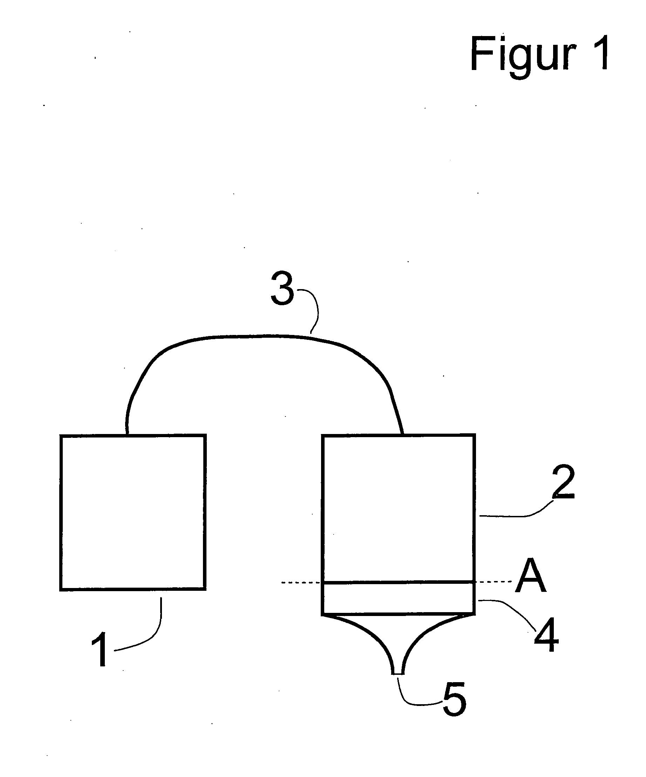

Figur 1 stellt schematisch eine Vorrichtung zur Herstellung von Kaffeegetränkten dar, welche eine Flüssigkeitszuführeinheit 1 und eine Brühkammer 2 aufweist. Die Flüssigkeitszuführeinheit 1 ist über eine Leitung 3 fluidleitend mit der Brühkammer 2 verbunden.

Die Vorrichtung weist ferner nicht dargestellte Elemente auf, mittels derer Kaffeepulver in die Brühkammer 2 eingeführt und nach Abschluss des Brühvorgangs durch (nicht dargestellte) Entsorgungs- und/oder Spülvorrichtungen wieder entnommen werden kann.

Wesentlich ist, dass die Vorrichtung zur Herstellung von Kaffee in Figur 1 einen Filter 4 aufweist, welcher im Flussweg der Flüssigkeit ausgangsseitig der Brühkammer 2 angeordnet ist.

Nach Füllen der Brühkammer 2 mit Kaffeepulver wird mittels der Flüssigkeitszuführeinheit 1 über die Leitung 3 heißes Wasser unter Druck der Brühkammer 2 zugeführt. Die Filteröffnungen des Filters 4 sind derart ausgebildet, dass sich für das zugeführte Kaffeepulver ein optimaler Druck zur Erzeugung von Kaffee in der Brühkammer 2 aufbaut. Das heiße Wasser tritt nach Durchfließen des Kaffeepulvers in der Brühkammer 2 durch den Filter 4 hindurch und wird an einem Auslass 5 beispielsweise in eine Tasse ausgegeben.

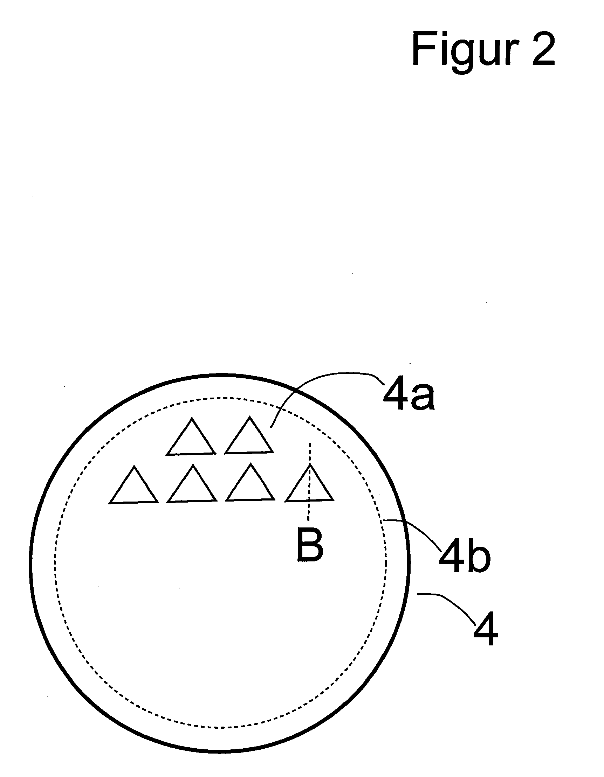

In Figur 2 ist ein Schnittbild gemäß der Linie A in Figur 1 und senkrecht zur Zeichenebene dargestellt. Figur 2 zeigt eine Draufsicht von oben auf den Filter 4. Der Filter 4 weist in einem Filterbereich 4b eine Vielzahl von Filteröffnungen auf, von denen lediglich sechs dargestellt und eine in Figur 2 beispielhaft mit dem Bezugszeichen 4a gekennzeichnet ist.

Sämtliche Filteröffnungen weisen die Form eines Tetraederstumpfes auf. Der Tetraederstumpf ergibt sich aus einem regelmäßigen Tetraeder, dessen sämtliche Seitenflächen regelmäßige Dreiecke sind, wobei nach Art eines Pyramidenstumpfes ein oberer Bereich des Tetraeders entfernt ist, d. h. parallel zu der Grundfläche des Tetraeders ist an der Spitze des Tetraeders eine kleine, zum ursprünglichen Tetraeder ähnliche Tetraeder-Pyramide entfernt.

Hieraus ergibt sich, dass im Filterbereich sowohl an der der Brühkammer zugewandten Oberseite des Filters, als auch an der dem Auslass 5 zugewandten Unterseite des Filters 4 sämtliche Filteröffnungen eine Querschnittsfläche in Form eines gleichseitigen Dreiecks aufweisen, wobei die Querschnittsflächen an der Oberseite jeweils kleiner sind als die Querschnittsflächen an der Unterseite des Filters 4.

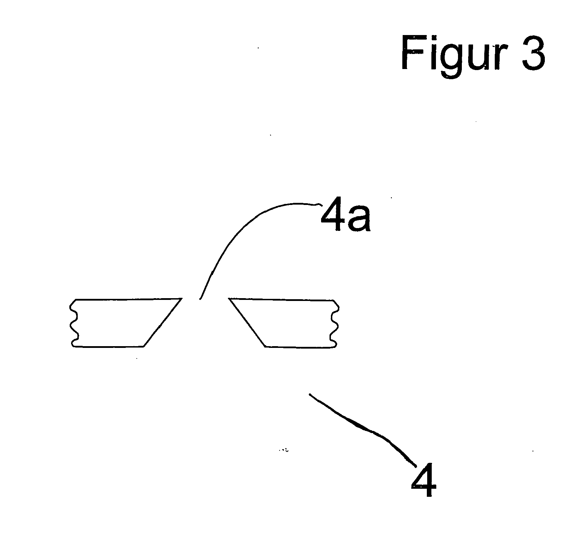

In Figur 3 ist ein Teilquerschnitt gemäß Linie B in Figur 2 und senkrecht zur Zeichenebene dargestellt, der somit einen Querschnitt durch die Filteröffnung 4a zeigt. Deutlich ist erkennbar, dass an der oben liegenden Oberseite des Filters 4 die Querschnittsfläche der Filteröffnung 4 geringer ist als an der unterliegenden Unterseite.

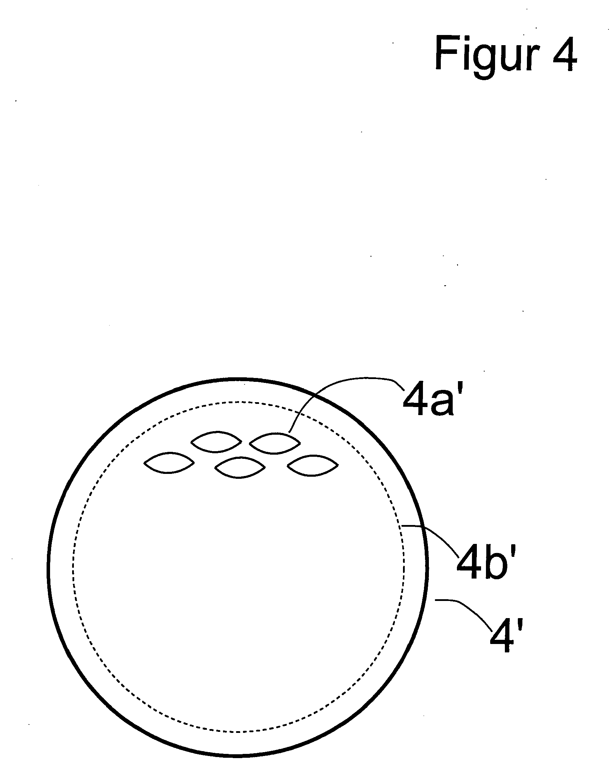

Ein weiteres Ausführungsbeispiel eines erfindungsgemäßen Filters ist in Figur 4 dargestellt. Figur 4 zeigt analog zu Figur 2 eine Draufsicht von oben auf einen erfindungsgemäßen Filter 4'. Der Filter 4' weist eine Vielzahl von Filteröffnungen auf, von denen lediglich fünf exemplarisch dargestellt sind und eine mit einem Bezugszeichen 4a' versehen wurde. Die Filteröffnungen besitzen eine einer Ellipse angenäherte Form, weisen jedoch jeweils rechts und links in Figur 4 einen spitzwinkligen Eckbereich auf, d. h., jede Filteröffnung weist genau zwei spitzwinklige Eckbereiche auf. Bei dem in Figur 4 dargestellten Ausführungsbeispiel weisen ebenfalls die an der Unterseite des Filters 4' gelegenen Querschnittsflächen der Filteröffnungen jeweils genau zwei spitzwinklige Eckbereiche auf und sind analog der Querschnittsflächen an der Oberseite ausgebildet, weisen jedoch eine größere Querschnittsfläche als diese auf.

## Patentansprüche

1. Filter (4, 4') zur Zubereitung flüssiger Lebensmittel aus einem Getränkesubstrat, insbesondere zur Zubereitung von Kaffee,
umfassend mindestens einen Filterbereich (4b, 4b'), welcher eine Vielzahl den Filter im Filterbereich (4b, 4b') durchdringende Filteröffnungen aufweist,
**dadurch gekennzeichnet,**
**dass** die Querschnittsfläche jeder der Vielzahl der Filteröffnungen (4a, 4a') im Filterbereich (4b, 4b') zumindest an einer Oberseite des Filters genau zwei oder genau drei spitzwinklige Eckbereiche aufweist und
**dass** jede der Vielzahl der Filteröffnungen (4a, 4a') im Filterbereich (4b, 4b') an der Oberseite des Filters (4, 4') eine geringere Querschnittsfläche aufweist als an einer der Oberseite gegenüberliegenden Unterseite des Filters.

2. Filter (4, 4') nach Anspruch 1,
**dadurch gekennzeichnet,**
**dass** im Filterbereich die Querschnittsfläche jeder der Vielzahl der Filteröffnungen (4a, 4a') ausgehend von der Oberseite des Filters (4, 4') zur der Unterseite des Filters hin zunimmt, vorzugsweise konstant oder stufenartig zunimmt.

3. Filter (4) nach einem der vorangegangenen Ansprüche,
**dadurch gekennzeichnet,**
**dass** im Filterbereich (4a) die Querschnittsfläche jeder der Vielzahl der Filteröffnungen (4a) zumindest an der Oberseite des Filters ein Dreieck, vorzugsweise ein gleichseitiges Dreieck ist,
insbesondere, dass jede der Vielzahl der Filteröffnungen die Form eines Tetraederstumpfes aufweist.

4. Filter (4') nach einem der Ansprüche 1 bis 2,
**dadurch gekennzeichnet**,
die im Filterbereich (4a') Querschnittsfläche jeder der Vielzahl der Filter-öffnungen (4a') zumindest an der Oberseite des Filters (4') genau zwei spitzwinklige Eckbereiche aufweist, welche durch zwei, jeweils zur Innenseite der Querschnittsfläche gekrümmte Linien miteinander verbunden sind.

5. Filter (4, 4') nach einem der vorangegangenen Ansprüche,
**dadurch gekennzeichnet,**
**dass** der Filterbereich (4b, 4b') zwischen Ober- und Unterseite eine Dicke von mindestens 0,3 mm, vorzugsweise mindestens 0,5 mm, im Weiteren bevorzugt eine Dicke im Bereich zwischen 0,5 mm und 1,0 mm aufweist.

6. Filter (4, 4') nach einem der vorangegangenen Ansprüche,
**dadurch gekennzeichnet,**
**dass** im Filterbereich die Querschnittsfläche jeder der Vielzahl der Filteröffnungen an der Oberseite des Filters im Bereich von 0,01 mm² bis 2 mm², vorzugsweise im Bereich von 0,02 mm² bis 0,08 mm² beträgt.

7. Filter (4, 4') nach einem der vorangegangenen Ansprüche,
**dadurch gekennzeichnet,**
**dass** das Verhältnis der Querschnittsfläche an der Oberseite zu der Querschnittsfläche an der Unterseite jeder der Vielzahl der Filteröffnungen im Bereich 1:1.2 bis 1:3, vorzugsweise im Bereich 1:1.5 bis 1:2 liegt.

8. Filter (4, 4') nach einem der vorangegangenen Ansprüche,
**dadurch gekennzeichnet,**
**dass** die Filteröffnungen einen Abstand im Bereich von 0,02 mm bis 1,5 mm, vorzugsweise im Bereich von 0,05 mm und 0,3 mm aufweisen.

9. Filter (4, 4') nach einem der vorangegangenen Ansprüche,
**dadurch gekennzeichnet,**
**dass** zumindest der Filterbereich (4b, 4b') des Filters aus Metall, vorzugsweise aus Aluminium oder rostfreiem Stahl besteht.

10. Vorrichtung zur Herstellung flüssiger Lebensmittel, insbesondere von Kaffee,
umfassend mindestens eine Brüheinheit mit einer Brühkammer (2) zur Aufnahme eines Lebensmittelproduktes mit löslichen Aromastoffen,
eine Flüssigkeitszuführeinheit (1), welche fluidleitend mit der Brühkammer (2) verbunden ist, zum Zuführen von Flüssigkeit in die Brühkammer (2),
und einen im Flussweg an einem Flüssigkeitsausgang der Brühkammer (2) angeordneten Filter (4, 4'),
**dadurch gekennzeichnet,**
**dass** der Filter (4, 4') gemäß einem der vorangegangenen Ansprüche ausgebildet ist.

11. Verfahren zur Herstellung eines Filters gemäß einem der Ansprüche 1 bis 8,
**dadurch gekennzeichnet,**
**dass** der Filter (4, 4') aus einem Rohling erstellt wird, indem mittels eines Laserstrahls aus dem Rohling durch lokales Herausschneiden und/oder Aufschmelzen und/oder Verdampfen des Rohlingmaterials eine Vielzahl von Filteröffnungen in einem Filterbereich (4b, 4b') des Rohlings zur Herstellung des Filters erzeugt werden,
wobei die Querschnittsfläche jeder der Vielzahl der Filteröffnungen im Filterbereich zumindest an einer Oberseite des Filters mit genau zwei oder genau drei spitzwinkligen Eckbereichen erzeugt wird und
im Filterbereich jede der Vielzahl der Filteröffnungen an der Oberseite des Filters mit einer geringeren Querschnittsfläche als an einer der Oberseite gegenüberliegenden Unterseite des Filters erzeugt wird.

12. Verfahren nach Anspruch 11,
**dadurch gekennzeichnet,**
**dass** im Filterbereich die Filteröffnungen erzeugt werden, indem bei jeder Filteröffnung mittels des Laserstrahls eine runde oder ovale, sich von der Ober- zu der Unterseite des Filters vergrößernde Öffnung erzeugt wird und
in einem nachfolgenden Verfahrensschritt - gegebenenfalls unter Zwischenschaltung weiterer Verfahrensschritte - mittels des Laserstrahls die gewünschte Form der Filteröffnung mit genau zwei oder genau drei spitzwinkligen Eckbereichen durch Herausschneiden und/oder Aufschmelzen und/oder Verdampfen des Rohlingmaterials erzeugt wird.

13. Verfahren nach Anspruch 12,
**dadurch gekennzeichnet,**
**dass** während der Erzeugung der runden oder ovalen, sich im Filterbereich von der Ober- zu der Unterseite des Filters vergrößernden Öffnung der Durchmesser des Laserstrahls mittels einer Durchmessersteuereinheit in mindestens einer Richtung parallel zu der Oberseite vergrößert wird, vorzugsweise simultan in zwei zueinander senkrecht stehenden und parallel zu der Oberseite stehenden Richtungen.

14. Verwendung eines Lasers zur Herstellung eines Filters gemäß einem der
Ansprüche 1 bis 8.
